# EUROPEAN PATENT SPECIFICATION

(11) **EP 2 207 613 B1**
(45) Date of publication and mention of the grant of the patent: **05.05.2021**
(21) Application number: 08845137.2
(22) Date of filing: 28.10.2008
(51) Int. Cl.: B01D 69/02, B01D 69/12, B01D 67/00, C08J 7/18, B01D 71/26, B01D 65/02, B05D 1/00

(54) **USE OF FILTRATION MEMBRANES**
VERWENDUNG VON FILTRATIONSMEMBRANEN
UTILISATION DE MEMBRANES DE FILTRATION

(30) Priority: 02.11.2007 GB 0721527
(43) Date of publication of application: 21.07.2010
(73) Proprietor: P2i Ltd, Abingdon, Oxfordshire OX14 4SA (GB)
(72) Inventor: COULSON, Stephen, Oxfordshire OX14 5FP (GB); WAKEMAN, Richard, Devon EX5 1DD (GB)
(74) Representative: Greaves Brewster LLP
(86) International application number: PCT/GB2008/003644
(87) International publication number: WO 2009/056812

(56) References cited:
- GB-A- 2 434 368
- US-A- 5 773 098
- US-A1- 2003 077 435
- US-A1- 2006 040 053

## Description

The present invention relates to the use of a polymerised fluorocarbon coating, deposited by a plasma polymerisation process, for maintaining pore size of a reusable filtration membrane subject to caustic washing.

Filtration of solids from liquids or gases is widely used in many fields including the biosciences, industrial processing, laboratory testing, food & beverage, electronics and water treatment. Membrane filters are porous or microporous films used to carry out these types of operation.

Membrane filters (which may also be known as screens, sieves, microporous filters, microfilters, ultrafilters or nanofilters) retain solid bodies such as particles or microorganisms etc. which are larger than their pore size, mainly by surface capture. Some particles smaller than the stated pore size may be retained by other mechanisms.

However, initial selection of membrane filters is generally on the basis of the pore size and the pore size distribution. The precise nature of the pores size is very important, since the pore size rating will effectively control the utility to which the membrane filter may be put.

In many cases, the filtration membrane may be used repeatedly or over prolonged periods. Frequently in such cases, it is vital that the membrane is properly washed or otherwise sanitised between uses, to avoid cross contamination. The pores of the filters can harbour particles including microorganisms, which may present other risks including health risks. Thus there is a need to use relatively harsh conditions including caustic washing agents to avoid these risks.

Because of the relatively fine and delicate nature of the porous structure, washing procedures, in particular where harsh chemicals such as the caustic chemicals found in many cleaning and sanitising products, can erode the membrane, so that the pores become larger with time. Therefore, it is important that where membrane filters are intended for repeated use that the pore size retains its integrity and consistency through repeated washing processes. Otherwise, the reliability of the filtering process may be jeopardised.

In order to achieve this reliability, the membranes are made from materials such as highly resistant and rigid polymers with a high modulus which have the desired characteristics. Examples may include PVDF and PTFE, but these materials tend to be fairly costly.

Plasma deposition techniques have been quite widely used for the deposition of polymeric coatings onto a range of surfaces, and in particular onto fabric surfaces. This technique is recognised as being a clean, dry technique that generates little waste compared to conventional wet chemical methods. Using this method, plasmas are generated from organic molecules, which are subjected to an electrical field. When this is done in the presence of a substrate, the radicals of the compound in the plasma polymerise on the substrate. Conventional polymer synthesis tends to produce structures containing repeat units that bear a strong resemblance to the monomer species, whereas a polymer network generated using a plasma can be extremely complex. The properties of the resultant coating can depend upon the nature of the substrate as well as the nature of the monomer used and conditions under which it is deposited.

GB2434368 A discloses a laboratory consumable having a polymeric coating, formed by exposing said consumable to pulsed plasma.

US5773098 A discloses a thin fluoropolymer film is covalently bonded to a microporous ptfe film to make a bilayer for separation, filtration or reverse osmosis, by exposing the microporous film to perfluorocyclohexane under plasma.

US2006040053 A1 discloses the preparation of asymmetric membranes using hot-filament chemical vapor deposition.

US2003077435 A1 discloses a porous media or membranes having a surface coating that includes a cross-linked terpolymer which has a superior combination of properties, including heat stable biomolecule resistant adsorptive properties, resistance to strong alkaline solutions, and low levels of extractable matter.

The applicants have found that by treating filtration membranes using such a process the properties, in particular the resistance to repeated washing, may be enhanced significantly.

The present invention provides for a use of a polymerised fluorocarbon coating, deposited by a plasma polymerisation process, for maintaining pore size of a reusable filtration membrane subject to caustic washing according to claim 1. Preferred embodiments are expressed in the dependent claims.

Treatment in this way has been found to make a reusable filtration membrane retain pore size much more consistently, even when subject to caustic washing.

As used herein, the expression "caustic washing" refers to any procedure in which chemical cleaning agents containing highly alkaline components such as sodium hydroxide are utilised. This includes many cleaning and sanitising products including bleaches and the like.

Suitable filtration membranes will be those made of a synthetic polymeric material. However, in view of the enhancement conveyed by the process, the polymeric material may generally be of a cheaper or lower cost polymer than has been used hitherto, where resistance to washing has proved to be a limiting factor. Thus for example, polyethylene filtration membranes may be produced which have good wash resistance and therefore may be used.

Depending upon the nature of the polymeric material deposited, the filtration membrane treated in this way may also be water and oil repellent, and also resistant to clogging. They may have useful "shake dry" properties also, reducing risk of contamination after washing.

Furthermore, the enhancement material or layer becomes molecularly bound to the surface and so there are no leachables; the modification becomes part of the membrane.

Membranes treated in accordance with the invention retain their porosity, as the coating layer deposited thereon is only molecules thick. Therefore, the liquid or even small particles can continue to pass through them, in particular when a positive pressure is applied to the liquid, or a negative pressure is applied to the other side of the membrane to draw the liquid through. However, larger particles will not pass through the membrane.

The monomer used in the invention is a compound of formula (IV) 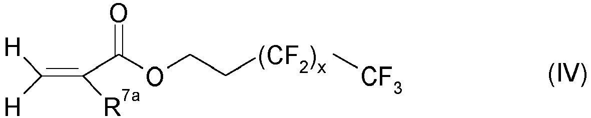 where R^{7a} is hydrogen, C₁₋₁₀ alkyl, or C₁₋₁₀ haloalkyl; and where x is an integer of from 1 to 9. In particular R^{7a} is hydrogen, x is 4 to 9 and preferably 7. In that case, the compound of formula (IV) is 1H, 1H, 2H, 2H-heptadecafluorodecylacrylate.

In general, the filtration membrane to be treated is placed within a plasma chamber together with the material to be deposited in gaseous state, a glow discharge is ignited within the chamber and a suitable voltage is applied, which may be pulsed.

The polymeric coating may be produced under both pulsed and continuous-wave plasma deposition conditions but pulsed plasma may be preferred as this allows closer control of the coating, and so the formation of a more uniform polymeric structure.

As used herein, the expression "in a gaseous state" refers to gases or vapours, either alone or in mixture, as well as aerosols.

Precise conditions under which the plasma polymerization takes place in an effective manner will vary depending upon factors such as the nature of the polymer, the filtration membrane treated including both the material from which it is made and the pore size etc. and will be determined using routine methods and/or the techniques.

Suitable plasmas for use in the method include non-equilibrium plasmas such as those generated by radiofrequencies (RF), microwaves or direct current (DC). They may operate at atmospheric or sub-atmospheric pressures as are known in the art. In particular however, they are generated by radiofrequencies (RF).

Various forms of equipment may be used to generate gaseous plasmas. Generally these comprise containers or plasma chambers in which plasmas may be generated. Particular examples of such equipment are described for instance in WO2005/089961 and WO02/28548, but many other conventional plasma generating apparatus are available.

The gas present within the plasma chamber may comprise a vapour of the monomer alone, but it may be combined with a carrier gas, in particular, an inert gas such as helium or argon, if required. In particular helium is a preferred carrier gas as this can minimise fragmentation of the monomer.

When used as a mixture, the relative amounts of the monomer vapour to carrier gas is suitably determined in accordance with procedures which are conventional in the art. The amount of monomer added will depend to some extent on the nature of the particular monomer being used, the nature of the substrate being treated, the size of the plasma chamber etc. Generally, in the case of conventional chambers, monomer is delivered in an amount of from 50-250mg/minute, for example at a rate of from 100-150mg/minute. It will be appreciated however, that the rate will vary depending on the reactor size chosen and the number of substrates required to be processed at once; this in turn depends on considerations such as the annual through-put required and the capital outlay.

Carrier gas such as helium is suitably administered at a constant rate for example at a rate of from 5-90 standard cubic centimetres per minute (sccm), for example from 15-30sccm. In some instances, the ratio of monomer to carrier gas will be in the range of from 100:0 to 1:100, for instance in the range of from 10:0 to 1:100, and in particular about 1:0 to 1:10. The precise ratio selected will be so as to ensure that the flow rate required by the process is achieved.

In some cases, a preliminary continuous power plasma may be struck for example for from 15 seconds to 10 minutes, for example from 2-10 minutes within the chamber. This may act as a surface pre-treatment step, ensuring that the monomer attaches itself readily to the surface, so that as polymerisation occurs, the coating "grows" on the surface. The pre-treatment step may be conducted before monomer is introduced into the chamber, in the presence of only an inert gas.

The plasma is then suitably switched to a pulsed plasma to allow polymerisation to proceed, at least when the monomer is present.

In all cases, a glow discharge is suitably ignited by applying a high frequency voltage, for example at 13.56MHz. This is applied using electrodes, which may be internal or external to the chamber, but in the case of larger chambers are generally internal.

Suitably the gas, vapour or gas mixture is supplied at a rate of at least 1 standard cubic centimetre per minute (sccm) and preferably in the range of from 1 to 100sccm.

In the case of the monomer vapour, this is suitably supplied at a rate of from 80-300mg/minute, for example at about 120mg/minute depending upon the nature of the monomer, the size of the chamber and the surface area of the product during a particular run whilst the pulsed voltage is applied. It may however, be more appropriate for industrial scale use to have a fixed total monomer delivery that will vary with respect to the defined process time and will also depend on the nature of the monomer and the technical effect required.

Gases or vapours may be delivered into the plasma chamber using any conventional method. For example, they may be drawn, injected or pumped into the plasma region. In particular, where a plasma chamber is used, gases or vapours may be drawn into the chamber as a result of a reduction in the pressure within the chamber, caused by use of an evacuating pump, or they may be pumped, sprayed, dripped, electrostatically ionised or injected into the chamber as is common in liquid handling. Polymerisation is suitably effected using vapours of compounds for example of formula (I), which are maintained at pressures of from 0.1 to 400mtorr, suitably at about 10-100mtorr.

The applied fields are suitably of power of from 5 to 500W for example from 20 to 500W, suitably at about 100W peak power, applied as a continuous or pulsed field. Where used, pulses are suitably applied in a sequence which yields very low average powers, for example in a sequence in which the ratio of the time on : time off is in the range of from 1:500 to 1:1500. Particular examples of such sequence are sequences where power is on for 20-50µs, for example about 30µs, and off for from 1000µs to 30000µs, in particular about 20000µs. Typical average powers obtained in this way are 0.01W.

The fields are suitably applied from 30 seconds to 90 minutes, preferably from 5 to 60 minutes, depending upon the nature of the compound of formula (I) and the filtration membrane.

Suitably a plasma chamber used is of sufficient volume to accommodate multiple membranes.

A particularly suitable apparatus and method for producing filtration membranes in accordance with the invention is described in WO2005/089961.

In particular, when using high volume chambers of this type, the plasma is created with a voltage as a pulsed field, at an average power of from 0.001 to 500W/m³, for example at from 0.001 to 100W/m³ and suitably at from 0.005 to 0.5W/m³.

These conditions are particularly suitable for depositing good quality uniform coatings, in large chambers, for example in chambers where the plasma zone has a volume of greater than 500cm³, for instance 0.1m³ or more, such as from 0.5m³-10m³ and suitably at about 1m³. The layers formed in this way have good mechanical strength.

The dimensions of the chamber will be selected so as to accommodate the particular filtration membrane or batch of membranes being treated. For instance, generally cuboid chambers may be suitable for a wide range of applications, but if necessary, elongate or rectangular chambers may be constructed or indeed cylindrical, or of any other suitable shape.

The chamber may be a sealable container, to allow for batch processes, or it may comprise inlets and outlets for the filtration membranes, to allow it to be utilised in a continuous process as an in-line system. In particular in the latter case, the pressure conditions necessary for creating a plasma discharge within the chamber are maintained using high volume pumps, as is conventional for example in a device with a "whistling leak". However it will also be possible to process filtration membranes at atmospheric pressure, or close to, negating the need for "whistling leaks".

A further aspect comprises a reusable filtration membrane which has been treated by a method as described above. In particular, the membrane is of a synthetic polymeric material, such as polyethylene.

In yet a further aspect, a method of filtering a liquid is provided, said method comprising passing a sample of liquid through a filtration membrane as described above, and after use, washing the filtration membrane in a caustic or other cleaning solution in preparation for reuse.

In yet a further aspect, the invention provides the use of a polymerised fluorocarbon or hydrocarbon coating, deposited by a plasma polymerisation process, for making a filtration membrane resistant to chemical attack, such as that to which they are subjected during cleaning. Suitable fluorocarbon and hydrocarbon coatings are obtainable as described above.

The invention will now be particularly described by way of example, with reference to the accompanying diagrammatic drawings in which:

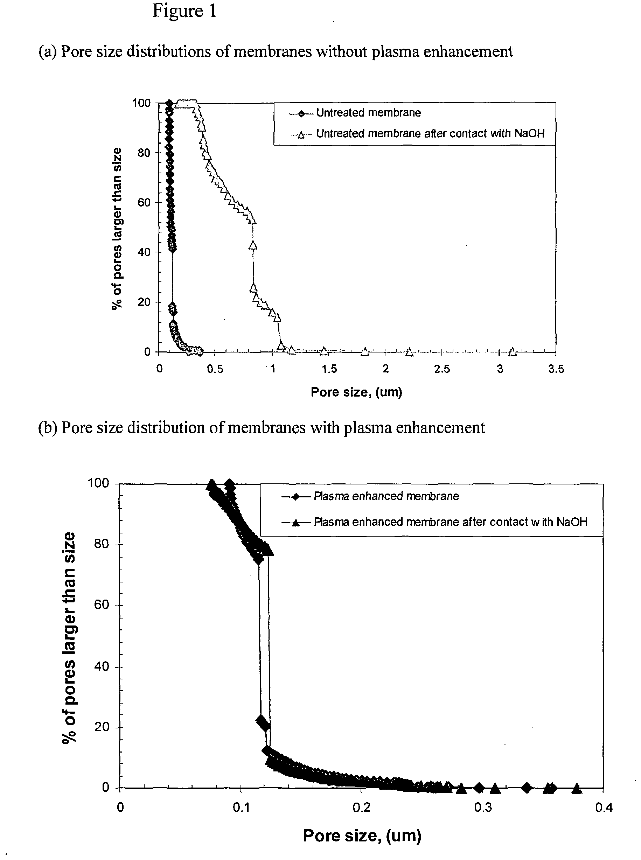

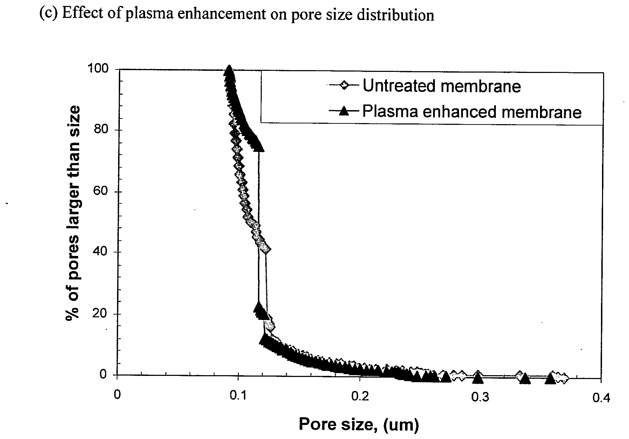

Figure 1 is a series of graphs showing the pores size distribution data for the filtration membrane sold as E-14PO2E samples, plotted as cumulative oversize curves; wherein (a) shows the results of membranes without treatment in accordance with the invention before (•) and after (▲) washing in caustic soda; (b) shows the results of membranes treated in accordance with the invention before (•) and after (▲) washing in caustic soda; and (c) shows the results of membranes before (•) and after (▲) treatment according to the invention; and

### Example 1

### Wash test

A series of membranes were produced by subjecting a polyethylene filtration membrane, sold as E-14P02E, to a plasma procedure. Samples of E-14P02E were placed into a plasma chamber with a processing volume of ~ 300 litres. The chamber was connected to supplies of the required gases and or vapours, via a mass flow controller and/or liquid mass flow meter and a mixing injector or monomer reservoir as appropriate.

The chamber was evacuated to between 3 and 10 mtorr base pressure before allowing helium into the chamber at 20 sccm until a pressure of 80 mtorr was reached. A continuous power plasma was then struck for 4 minutes using RF at 13.56 MHz at 300 W.

After this period, 1H, 1H, 2H, 2H-heptadecafluorodecylacrylate (CAS # 27905-45-9) of formula 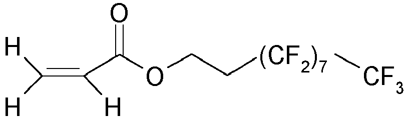 was brought into the chamber at a rate of 120 milligrams per minute and the plasma switched to a pulsed plasma at 30 microseconds on-time and 20 milliseconds off-time at a peak power of 100 W for 40 minutes. On completion of the 40 minutes the plasma power was turned off along with the processing gases and vapours and the chamber evacuated back down to base pressure. The chamber was then vented to atmospheric pressure and the membrane samples removed.

The pore size distribution of both a treated and untreated membrane was measured both before and after immersion in caustic soda (NaOH) solution. Caustic soda (NaOH) was used in the tests as it is a component of many cleaning and sanitising chemicals for membranes. For example, Floclean MC11 is used for the removal of foulants composed of organics, silts, or biological materials from membranes and contains 1% NaOH; to remove fats and oils, proteins, polysaccharides, and bacteria from membranes by hydrolysis and oxidation, a solution containing 0.5N NaOH is recommended (C. Munir, Ultrafiltration and Microfiltration Handbook, 2nd edition, CRC Press)*.*

The pores size distribution data for untreated and treated membranes is shown in Figure 1(a) and (1b) respectively.

The results show that in the untreated membrane, the pore sizes have been increased considerably by the NaOH. This results from damage to the pore structure, and points to the fact that the sample is not chemically resistant to NaOH. However, the pore size remained largely constant in the treated membrane indicating a high level of NaOH resistance. Therefore, the treatment protected the sample from NaOH attack. The pore size distribution was not changed by the NaOH immersion.

### Example 2

### Effect on pore size of treatment

The pore size distributions of the E-14P02E membrane samples before and after treatment as described in Example 1 were also measured. The pore size distribution was found to be narrow; which is advantageous for filtration applications, where the 'best' membranes would have a monosized distribution of pore sizes. Taking account of the errors in the measurement technique, there appears to be no significant difference between the pore size distributions of the two membranes, indicating that this remains unaffected by the treatment.

## Claims

1. The use of a polymerised fluorocarbon coating, deposited by a plasma polymerisation process, for maintaining pore size of a reusable filtration membrane subject to caustic washing, wherein the fluorocarbon coating is formed by exposing the reusable filtration membrane to a plasma comprising a fluorocarbon monomer so as to form a polymeric layer on the surface thereof, wherein the fluorocarbon monomer is a compound of formula (IV) 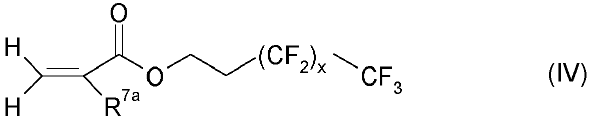 where R^{7a} is hydrogen, C₁₋₁₀ alkyl, or C₁₋₁₀ haloalkyl; and where x is an integer of from 1 to 9.

2. The use according to claim 1, wherein the fluorocarbon monomer is 1H, 1H, 2H, 2H-heptadecafluorodecylacrylate.

3. The use according to claim 1 or claim 2, wherein the fluorocarbon coating is formed by placing the filtration membrane in a plasma deposition chamber, igniting a glow discharge within said chamber, and applying a voltage as a pulsed field.

4. The use according to claim 3, wherein applied voltage is at a power of from 40 to 500 W.

5. The use according to claim 3 or claim 4, wherein the voltage is pulsed in a sequence in which the ratio of the time on : time off is in the range of from 1:500 to 1:1500.

6. The use according to any one of claims 3 to 5, wherein, in a preliminary step prior to exposing said reusable filtration membrane to a plasma comprising a fluorocarbon monomer, a continuous power plasma is applied to the reusable filtration membrane.

7. The use according to claim 6, wherein the preliminary step is conducted in the presence of an inert gas.

8. The use according to any preceding claim, wherein the filtration membrane is of a synthetic polymeric material.

9. The use according to claim 8, wherein the synthetic polymeric material is polyethylene.

## Patentansprüche

1. Verwendung einer polymerisierten Fluorkohlenstoffbeschichtung, abgeschieden durch ein Plasmapolymerisationsverfahren, zur Aufrechterhaltung der Porengröße einer wiederverwendbaren Filtrationsmembran, die einer Laugenwäsche unterzogen wird, wobei die Fluorkohlenstoffbeschichtung dadurch gebildet wird, dass die wiederverwendbare Filtrationsmembran einem Plasma ausgesetzt wird, das ein Fluorkohlenstoff-Monomer enthält, um so eine polymere Schicht auf deren Oberfläche zu bilden, wobei das Fluorkohlenstoff-Monomer eine Verbindung der Formel (IV) ist, 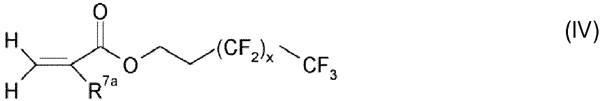 worin R^{7a} Wasserstoff, C₁₋₁₀-Alkyl oder C₁₋₁₀-Halogenalkyl ist und wobei x eine ganze Zahl von 1 bis 9 ist.

2. Verwendung nach Anspruch 1, wobei das Fluorkohlenstoff-Monomer 1H, 1H, 2H, 2H-Heptadecafluordecylacrylat ist.

3. Verwendung nach Anspruch 1 oder Anspruch 2, wobei die Fluorkohlenstoffbeschichtung dadurch gebildet wird, dass die Filtrationsmembran in einer Plasmabeschichtungskammer angeordnet wird, eine Glimmentladung in der Kammer gezündet und eine Spannung als gepulstes Feld angelegt wird.

4. Verwendung nach Anspruch 3, wobei die angelegte Spannung bei einer Leistung von 40 bis 500 Watt liegt.

5. Verwendung nach Anspruch 3 oder Anspruch 4, wobei die Spannung in einer Abfolge gepulst wird, in der das Verhältnis von Zeit ein : Zeit aus zwischen 1:500 und 1:1500 liegt.

6. Verwendung nach einem der Ansprüche 3 bis 5, wobei in einem Vorbereitungsschritt, bevor die wiederverwendbare Filtrationsmembran einem ein Fluorkohlenstoff-Monomer enthaltenden Plasma ausgesetzt wird, ein Dauerleistungsplasma auf die wiederverwendbare Filtrationsmembran aufgebracht wird.

7. Verwendung nach Anspruch 6, wobei der Vorbereitungsschritt in Gegenwart eines Inertgases durchgeführt wird.

8. Verwendung nach einem der vorhergehenden Ansprüche, wobei die Filtrationsmembran aus einem synthetischen Polymermaterial besteht.

9. Verwendung nach Ansprüche 8, wobei das synthetische Polymermaterial Polyethylen ist.

## Revendications

1. Utilisation d'un revêtement de fluorocarbone polymérisé, déposé par un procédé de polymérisation par plasma, destiné à maintenir la taille de pore d'une membrane de filtration réutilisable soumise à un lavage caustique, dans laquelle le revêtement de fluorocarbone est formé en exposant la membrane de filtration réutilisable à un plasma comprenant un monomère de fluorocarbone de manière à former une couche polymérique sur la surface de celle-ci, dans laquelle le monomère de fluorocarbone est un composé de formule (IV) 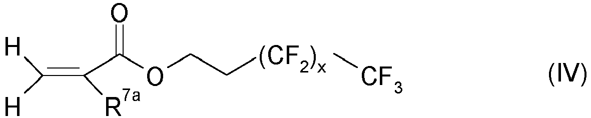 où R^{7a} est un hydrogène, un alkyle en Ci à 10, ou un haloalkyle en Ci à 10 ; et où x est un nombre entier allant de 1 à 9.

2. Utilisation selon la revendication 1, dans laquelle le monomère de fluorocarbone est le 1H, 1H, 2H, 2H-heptadécafluorodécylacrylate.

3. Utilisation selon la revendication 1 ou la revendication 2, dans laquelle le revêtement de fluorocarbone est formé en plaçant la membrane de filtration dans une chambre de dépôt par plasma, en allumant une décharge luminescente au sein de ladite chambre, et en appliquant une tension comme un champ pulsé.

4. Utilisation selon la revendication 3, dans laquelle la tension appliquée est à une puissance allant de 40 à 500 W.

5. Utilisation selon la revendication 3 ou la revendication 4, dans laquelle la tension est pulsée dans une séquence dans laquelle le rapport temps de marche/temps d'arrêt est compris dans la plage de 1/500 à 1/1 500.

6. Utilisation selon l'une quelconque des revendications 3 à 5, dans laquelle, dans une étape préliminaire avant l'exposition de ladite membrane de filtration réutilisable à un plasma comprenant un monomère de fluorocarbone, un plasma à courant continu est appliqué à la membrane de filtration réutilisable.

7. Utilisation selon la revendication 6, dans laquelle l'étape préliminaire est menée en présence d'un gaz inerte.

8. Utilisation selon l'une quelconque des revendications précédentes, dans laquelle la membrane de filtration est faite d'un polymère synthétique.

9. Utilisation selon la revendication 8, dans laquelle le polymère synthétique est le polyéthylène.
